# FASCICULE DE BREVET EUROPEEN

(11) **EP 2 348 614 B1**
(45) Date de publication et mention de la délivrance du brevet: **22.06.2016**
(21) Numéro de dépôt: 11305074.4
(22) Date de dépôt: 25.01.2011
(51) Int. Cl.: H02K 1/27

(54) **ROTOR DE MACHINE ÉLECTRIQUE TOURNANTE ÉQUIPÉ D'UNE FRETTE**
ROTOR FÜR ELEKTRISCH UMLAUFENDE MASCHINE, DER MIT EINER UMMANTELUNG AUSGESTATTET IST
ROTOR OF A ROTATING ELECTRIC MACHINE PROVIDED WITH A BINDER

(30) Priorité: 26.01.2010 FR 1050491
(43) Date de publication de la demande: 27.07.2011
(73) Titulaire: GE Energy Power Conversion Technology Limited, Rugby Warwickshire CV21 1BU (GB)
(72) Inventeur: Durantay, Lionel, 54390, FROUARD (FR)
(74) Mandataire: Serjeants LLP

(56) Documents cités:
- EP-A2- 0 463 611
- US-A- 2 949 555
- US-A- 5 900 689

## Description

La présente invention concerne un rotor de machine électrique tournante du type comportant un moyeu, des éléments actifs périphériques rapportés à la périphérie du moyeu et une frette ceinturant les éléments actifs périphériques et le moyeu.

Les rotors de machine électrique tournante comportent à la surface du moyeu central des éléments actifs périphériques, qui sont retenus contre la surface du moyeu. Ces éléments actifs périphériques peuvent être constitués, suivant qu'il s'agit ou non d'un rotor à aimant permanent, d'un ensemble de barreaux aimantés, ou de bobinages.

Ces éléments actifs périphériques sont soumis, lors de la rotation du rotor, à une force centrifuge de module très important, de sorte que pour les machines tournantes dont le rotor présente un grand diamètre et tourne à haute vitesse, une frette ceinturant l'ensemble des éléments périphériques est rapportée autour de ceux-ci pour assurer une reprise des efforts.

En particulier, le document US-A-5,900,689 décrit l'utilisation d'une frette formée par une matrice thermoplastique et des fibres de verre ou de carbone. La matrice thermoplastique est en polyphénylène sulfide (PPS), en polyéther imide (PEI), ou encore en polyétheréthercétone (PEEK). Cette frette est initialement sous forme d'une nappe, laquelle est bobinée autour du moyeu portant les éléments actifs périphériques. Lors du bobinage, la frette se déroule depuis une bobine, et est ensuite chauffée afin que la matrice thermoplastique maintienne une certaine tension résiduelle de la frette. La tension résiduelle de la frette après réalisation dépend alors notamment de la tension des fibres entre le rotor et la bobine initiale lors du bobinage des fibres.

La tension résiduelle de la frette appliquée sur les éléments actifs périphériques est ainsi difficilement maîtrisée.

L'invention a pour but de proposer un rotor de machine électrique tournante, notamment de moteur électrique, dont les éléments actifs périphériques sont retenus par une frette dont les caractéristiques sont facilement maîtrisables.

A cet effet, l'invention a pour objet un rotor de moteur électrique du type précité, caractérisé en ce que la frette comporte des fibres de poly-para-phénylène téréphtalamide noyées dans une matrice de polyétheréthercétone.

Suivant des modes particuliers de réalisation, le rotor comporte l'une ou plusieurs des caractéristiques suivantes :
- la frette est constituée de fibres de poly-para-phénylène téréphtalamide noyées dans une matrice de polyétheréthercétone ;
- la frette a une épaisseur comprise entre 3 mm et 20 mm ;
- la frette comporte entre 50% et 70%, de préférence 60%, en masse de poly-para-phénylène téréphtalamide ;
- la frette comporte entre 30% et 50%, de préférence 40 %, en masse de polyétheréthercétone.

L'invention a également pour objet un procédé de fabrication d'un rotor de machine électrique tournante comportant un moyeu, des éléments actifs périphériques rapportés à la périphérie du moyeu, caractérisé en ce qu'il comporte :
- la formation sur un mandrin indépendant du moyeu d'une frette comportant des fibres de renfort noyées dans une matrice de polyétheréthercétone ;
- le refroidissement du moyeu portant les éléments actifs périphériques ;
- l'introduction dans la frette du moyeu et des éléments actifs périphériques ainsi refroidis ; et
- le réchauffement du moyeu et des éléments actifs périphériques à l'intérieur de la frette, assurant une précontrainte de la frette.

Suivant des modes particuliers de mise en oeuvre, le procédé comporte l'une ou plusieurs des caractéristiques suivantes :
- la frette est constituée des fibres de renfort noyées dans la matrice de polyétheréthercétone ;
- les fibres de renfort sont des fibres de poly-para-phénylène téréphtalamide ;
- les fibres de renfort sont des fibres de verre ;
- les fibres de renfort sont des fibres de carbone.

L'invention sera mieux comprise à la lecture de la description qui va suivre, donnée uniquement à titre d'exemple et faite en se référant aux dessins, sur lesquels :
- la figure 1 est une vue en section transversale d'un rotor de machine électrique tournante selon l'invention ;
- la figure 2 est une vue en coupe longitudinale illustrant le procédé de fabrication d'un rotor selon l'invention.

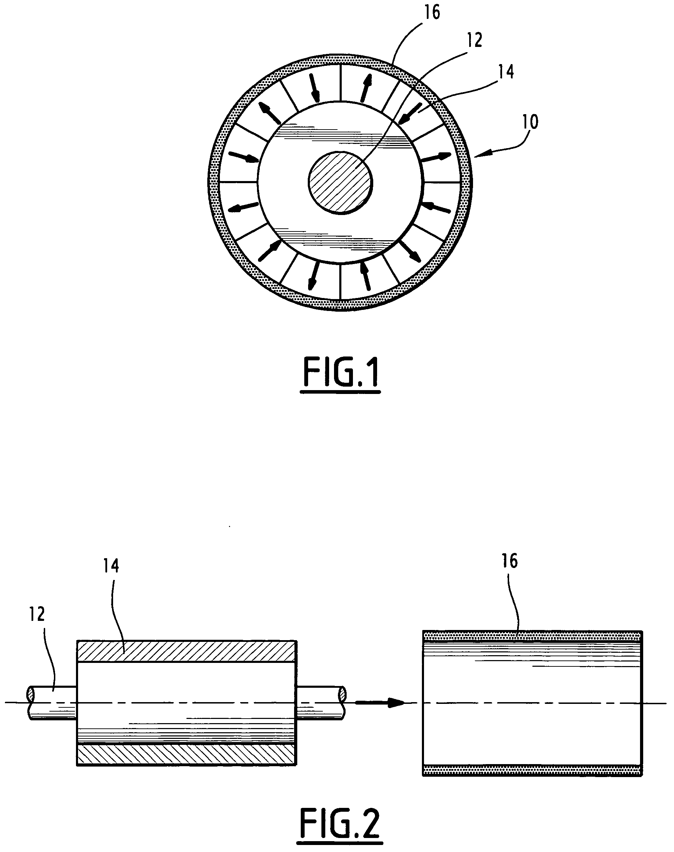

Le rotor 10 illustré sur la figure 1 est un rotor de machine électrique tournante, soit un alternateur, soit un moteur, de forte puissance. Ainsi, la puissance est comprise entre 1 MW et 20 MW. Le diamètre externe du rotor est compris entre 250 mm et 2 m, sa longueur étant comprise entre 500 mm et 2 m.

Le rotor est destiné à tourner à une vitesse comprise entre 1500 tours/minute et 20 000 tours/minute.

Dans l'exemple considéré, le rotor est celui d'une machine à aimants permanents.

Ce rotor comporte un moyeu central 12 formant la partie centrale du rotor et comportant à ses extrémités deux tourillons délimitant l'axe de rotation du rotor. A la périphérie du moyeu 12 est disposé un ensemble de barreaux aimantés 14 présentant une section sensiblement trapézoïdale et dont la longueur s'étend suivant les génératrices du rotor.

Ces barreaux aimantés sont disposés parallèlement les uns aux autres et sont orientés de manière à constituer les pôles du rotor comme connu en soi. Ils forment les éléments actifs périphériques du rotor. Dans un moteur dépourvu d'aimant permanent, les aimants sont remplacés par des bobinages.

Une frette 16 en forme de manchon cylindrique de section circulaire ceinture les barreaux aimantés 14 en étant appliqués contre ceux-ci et en les retenant contre le moyeu 12.

Cette frette 16 comporte une matrice de polyétheréthercétone renfermant des fibres de renfort, telles que des fibres de Kevlar.

Les fibres de Kevlar présentent l'avantage d'avoir une bonne résistance mécanique, ainsi qu'un module de Young élevé. Les propriétés mécaniques des fibres de Kevlar sont notamment meilleures que celles des fibres de verre. En outre, les fibres de Kevlar sont électriquement isolantes, tandis que les fibres de carbone sont légèrement conductrices. Les fibres de Kevlar présentent ainsi l'avantage d'offrir de bonnes propriétés mécaniques, tout en étant électriquement isolantes.

En variante, les fibres de renfort sont des fibres de verre ou encore des fibres de carbone.

Le polyétheréthercétone, couramment désigné par le sigle PEEK (acronyme anglais de PolyEtherEtherKetone), est commercialisé par exemple par la société VICTREX.

Le PEEK est un matériau thermoplastique semi-cristallin thermostable.

Le Kevlar désigne le poly-para-phénylène-téréphtalamide et est commercialisé par la société DuPont ou sous d'autres appellations par d'autres sociétés.

Avantageusement, la frette a une épaisseur comprise entre 3 mm et 20 mm. Le pourcentage de composition de la frette 16 en masse de fibres de renfort est compris entre 50% et 70%, de préférence égal à 60%. Le pourcentage de composition de la frette 16 en masse de PEEK est compris entre 30% et 50%, de préférence égal à 40%.

En variante, la frette 16 est uniquement constituée de la matrice de PEEK et des fibres de renfort, de sorte que la somme du pourcentage de composition de la frette 16 en masse de fibres de renfort et du pourcentage de composition de la frette 16 en masse de PEEK est égale à 100%.

Les fibres de Kevlar comportent des filaments présentant un diamètre compris entre 10 µm et 20 µm.

Pour la fabrication de la frette 16, celle-ci est réalisée sur un mandrin, non représenté, indépendant du moyeu et des éléments actifs périphériques du rotor. Le mandrin a une dimension correspondant exactement à la dimension souhaitée pour la frette. Celle-ci est inférieure aux dimensions du moyeu 12 portant les éléments actifs périphériques 14 en l'absence de frette. Des fibres de Kevlar sont bobinées sur le mandrin et celles-ci sont enduites de PEEK. L'agencement ainsi formé est placé dans une étuve permettant la polymérisation du PEEK. Le mandrin est ensuite retiré.

La frette 16 ainsi formée est enfilée sur le moyeu 12 portant les éléments actifs périphériques 14 après que ce dernier a été refroidi, par exemple par trempage dans un bain d'azote liquide afin que celui-ci se rétracte et que son diamètre diminue. Le moyeu 12 équipé des éléments actifs 14 ainsi rétractés est introduit dans la frette 16 comme représenté sur la figure 2. Ensuite, celui-ci se dilate à nouveau par réchauffement, assurant la cohésion entre la frette 16, le moyeu 12 et les éléments actifs périphériques 14 qu'elle renferme. Cette dilatation du moyeu 12 après son insertion dans la frette 16 assure également une précontrainte de la frette.

On constate qu'une frette ainsi réalisée assure une excellente retenue des organes actifs périphériques vis-à-vis de la force centrifuge et qu'il est aisé de calibrer la force de retenue de la frette.

## Revendications

1. Rotor (10) de machine électrique tournante comportant un moyeu (12), des éléments actifs périphériques (14) rapportés à la périphérie du moyeu (12) et une frette (16) ceinturant les éléments actifs périphériques (14) et le moyeu (12) **caractérisé en ce que** la frette (16) comporte des fibres de poly-para-phénylène téréphtalamide noyées dans une matrice de polyétheréthercétone.

2. Rotor (10) de machine électrique tournante selon la revendication 1, dans lequel la frette (16) est constituée de fibres de poly-para-phénylène téréphtalamide noyées dans une matrice de polyétheréthercétone.

3. Rotor (10) de machine électrique tournante selon la revendication 1 ou 2, dans lequel la frette (16) a une épaisseur comprise entre 3 mm et 20 mm.

4. Rotor (10) de machine électrique tournante selon l'une quelconque des revendications précédentes, dans lequel la frette (16) comporte entre 50% et 70%, de préférence 60%, en masse de poly-para-phénylène téréphtalamide.

5. Rotor (10) de machine électrique tournante selon l'une quelconque des revendications précédentes, dans lequel la frette (16) comporte entre 30% et 50%, de préférence 40 %, en masse de polyétheréthercétone.

6. Procédé de fabrication d'un rotor (10) de machine électrique tournante comportant un moyeu (12), des éléments actifs périphériques (14) rapportés à la périphérie du moyeu (12), **caractérisé en ce qu'**il comporte :
- la formation sur un mandrin indépendant du moyeu (12) d'une frette (16) comportant des fibres de renfort noyées dans une matrice de polyétheréthercétone ;
- le refroidissement du moyeu (12) portant les éléments actifs périphériques (14) ;
- l'introduction dans la frette (16) du moyeu (12) et des éléments actifs périphériques (14) ainsi refroidis ; et
- le réchauffement du moyeu (12) et des éléments actifs périphériques (14) à l'intérieur de la frette (16), assurant une précontrainte de la frette.

7. Procédé de fabrication selon la revendication 6, dans lequel la frette (16) est constituée des fibres de renfort noyées dans la matrice de polyétheréthercétone.

8. Procédé de fabrication selon la revendication 6 ou 7, dans lequel les fibres de renfort sont des fibres de poly-para-phénylène téréphtalamide.

9. Procédé de fabrication selon la revendication 6 ou 7, dans lequel les fibres de renfort sont des fibres de verre.

10. Procédé de fabrication selon la revendication 6 ou 7, dans lequel les fibres de renfort sont des fibres de carbone.

## Patentansprüche

1. Rotor (10) einer drehenden elektrischen Maschine aufweisend eine Nabe (12), aktive Umfangselemente (14), die am Umfang der Nabe (12) angebracht sind, und eine Bandage (16), die die aktiven Umfangselemente (14) und die Nabe (12) umfasst, **dadurch gekennzeichnet, dass** die Bandage (16) Fasern aus Poly-Para-Phenylenterephthalamaid aufweist, die in einer Matrix aus Polyetheretherketon getränkt sind.

2. Rotor (10) der drehenden elektrischen Maschine nach Anspruch 1, bei der die Bandage (16) aus Fasern aus Poly-Para-Phenylenterephthalamaid besteht, die in einer Matrix aus Polyetheretherketon getränkt sind.

3. Rotor (10) der drehenden elektrischen Maschine nach Anspruch 1 oder 2, bei dem die Bandage (16) eine Dicke hat, die zwischen 3mm und 20mm beträgt.

4. Rotor (10) der drehenden elektrischen Maschine nach irgendeinem der vorhergehenden Ansprüche, bei dem die Bandage (16) zwischen 50% und 70%, vorzugsweise 60% an Masse von Poly-Para-Phenylenterephthalamaid aufweist.

5. Rotor (10) der drehenden elektrischen Maschine nach irgendeinem der vorhergehenden Ansprüche, bei dem die Bandage (16) zwischen 30% und 50%, vorzugsweise 40%, an Masse von Polyetheretherketon aufweist.

6. Verfahren zur Herstellung eines Rotors (10) einer drehenden elektrischen Maschine aufweisend eine Nabe (12), aktive Umfangselemente (14), die am Umfang der Nabe (12) angebracht sind, **dadurch gekennzeichnet, dass** es aufweist:
- das Herstellen einer Bandage (16) aufweisend Verstärkungsfasern, die in einer Matrix aus Polyetheretherketon getränkt sind, auf einer Wickelhülle unabhängig von der Nabe (12);
- das Kühlen der Nabe (12), die die aktiven Umfangselemente (14) trägt;
- das Einsetzen der derart gekühlten Nabe (12) und der aktiven Umfangselemente (14) in die Bandage (16);
- das Wiedererwärmen der Nabe (12) und der aktiven Umfangselemente (14) im Inneren der Bandage (16), wodurch eine Vorspannung der Bandage sichergestellt wird.

7. Verfahren zur Herstellung nach Anspruch 6, bei dem die Bandage (16) aus Verstärkungsfasern besteht, die in einer Matrix aus Polyetheretherketon getränkt sind.

8. Verfahren zur Herstellung nach Anspruch 6 oder 7, bei dem die Verstärkungsfasern Fasern aus Poly-Para-Phenylenterephthalamaid sind.

9. Verfahren zur Herstellung nach Anspruch 6 oder 7, bei dem die Verstärkungsfasern Glasfasern sind.

10. Verfahren zur Herstellung nach Anspruch 6 oder 7, bei dem die Verstärkungsfasern Karbonfasern sind.

## Claims

1. Rotor (10) of an electrical rotating machine, comprising a hub (12), peripheral active elements (14) connected to the periphery of the hub (12), and a binding band (16) surrounding the peripheral active elements (14) and the hub (12), **characterized in that** the binding band (16) comprises poly-para-phenylene terephthalamide fibres embedded in a polyetheretherketone matrix.

2. Rotor (10) of an electrical rotating machine according to claim 1, wherein the binding band (16) consists of poly-para-phenylene terephthalamide fibres embedded in a polyetheretherketone matrix.

3. Rotor (10) of an electrical rotating machine according to claim 1 or 2, wherein the binding band (16) has a thickness between 3 mm and 20 mm.

4. Rotor (10) of an electrical rotating machine according to any of the preceding claims, wherein the binding band (16) comprises between 50% and 70%, preferably 60% by mass poly-para-phenylene terephthalamide.

5. Rotor (10) of an electrical rotating machine according to any of the preceding claims, wherein the binding band (16) comprises between 30% and 50%, preferably 40% by mass polyetheretherketone.

6. Method for production of a rotor (10) of an electrical rotating machine, comprising a hub (12), peripheral active elements (14) connected to the periphery of the hub (12), **characterized in that** it comprises:
- formation, on a mandrel independent of the hub (12), of a binding band (16) comprising reinforcing fibres embedded in a polyetheretherketone matrix;
- cooling of the hub (12) carrying the peripheral active elements (14);
- introduction of the hub (12) and the peripheral active elements (14) thus cooled into the binding band (16); and
- reheating of the hub (12) and the peripheral active elements (14) inside the binding band (16), ensuring a prestressing of the binding band.

7. Production method according to claim 6, wherein the binding band (16) comprises reinforcing fibres embedded in the polyetheretherketone matrix.

8. Production method according to claim 6 or 7, wherein the reinforcing fibres are poly-para-phenylene terephthalamide fibres.

9. Production method according to claim 6 or 7, wherein the reinforcing fibres are glass fibres.

10. Production method according to claim 6 or 7, wherein the reinforcing fibres are carbon fibres.
